Europäisches Patentamt

European Patent Office

Office européen des brevets

(19)

(11) Veröffentlichungsnummer: **0 175 910 B1**

(12) **EUROPÄISCHE PATENTSCHRIFT**

(45) Veröffentlichungstag der Patentschrift: 24.04.91

(51) Int. Cl.⁵: **B23D** 47/12, B27B 9/00

(21) Anmeldenummer: 85110243.4

(22) Anmeldetag: 16.08.85

(54) Kreissäge.

(30) Priorität: 27.09.84 DE 3435454

(43) Veröffentlichungstag der Anmeldung:
02.04.86 Patentblatt 86/14

(45) Bekanntmachung des Hinweises auf die
Patenterteilung:
24.04.91 Patentblatt 91/17

(84) Benannte Vertragsstaaten:
DE FR GB

(56) Entgegenhaltungen:
DE-A- 2 851 657          DE-C- 69 430
DE-C- 478 512          DE-C- 1 023 947
GB-A- 599 998          GB-A- 861 292

(73) Patentinhaber: ROBERT BOSCH GMBH
Postfach 50
W-7000 Stuttgart 1(DE)

(72) Erfinder: Bleicher, Manfred
Manosquerstrasse 36
W-7022 Leinfelden(DE)
Erfinder: Bohne, Ulrich, Dipl.-Ing.
Bildäckerstrasse 3
W-7441 Kohlberg(DE)

## Beschreibung

### Stand der Technik

Die Erfindung geht aus von einer Handkreissäge nach der Gattung des Hauptanspruchs. Es sind Kreissägen beispielsweise aus der DE-OS 28 51 657 bekannt geworden. Dort sind mindestens drei Sägeblattwellen auf einer Schwinge gelagert, um deren Abstand zueinander bezogen auf ein plattenförmiges Werkstück einstellen zu können. So ist es möglich plattenförmige Werkstücke unterschiedlicher Dicke zugleich mit mindestens einem Kreissägeblatt von oben und mindestens einem Kreissägeblatt von unten zu zersägen. Dies mindert die pro Sägeblatt aufzubringende Schnittleistung und verbessert so den Sägefortschritt.

Besonders für Handkreissägen ist eine derart aufwendige Sägeblattanordnung zu teuer und außerdem schwer beherrschbar. Dennoch ist eine Verbesserung der Schnittleistung relativ zur Motorleistung erwünscht.

### Vorteile der Erfindung

Die erfindungsgemäße Handkreissäge mit den kennzeichnenden Merkmalen des Hauptanspruchs hat gegenüber dem Vorbekannten Stand der Technik den Vorteil, mit einfachen Mitteln eine wesentliche Verbesserung der relativen Schnittleistung zu erreichen. Durch den Hubantrieb der Sägeblattwelle, senkrecht zu deren Längsachse, wird dem Sägeblattantrieb eine Vorschubbewegung überlagert. Das verbessert den Sägefortschritt wesentlich, ohne daß die Maschinenantriebsleistung erhöht werden muß.

Durch die in den Unteransprüchen aufgeführten Maßnahmen sind vorteilhafte Weiterbildungen und Verbesserungen der im Hauptanspruch angegebenen Handkreissäge moglich. Besonders vorteilhaft für eine gleichmäßige Abnutzung des Sägeblattes ist, daß die Frequenz des Hubantriebs verschieden ist von der Drehzahl, mit der die Sägeblattwelle rotiert. Dies kann erreicht werden mit den in den Unteransprüchen und den Ausführungsbeispielen angegebenen mechanischen Antrieben aber auch mit einem an sich bekannten elektrischen Schwingankerantrieb.

### Zeichnung

Drei Ausführungsbeispiele des Erfindungsgegenstandes sind in der Zeichnung dargestellt und in der nachfolgenden Beschreibung näher erläutert. Es zeigen:

Figuren 1 und 2 ein erstes Ausführungsbeispiel mit einer Getriebeansicht (Figur 1) und einem Schnitt A-B (Figur 2) zu Figur 1,

Figur 3 ein zweites Ausführungsbeispiel eines erfindungsgemäßen Hubgetriebes in einer Ansicht und

Figuren 4 und 5 ein drittes Ausführungsbeispiel in einer Getriebeansicht und einem Schnitt C-D dazu, wonach die formschlüssige Verbindung zwischen dem Hubantrieb und der Sägeblattwelle durch einen Kraftschluß ersetzt ist.

### Beschreibung der Ausführungsbeispiele

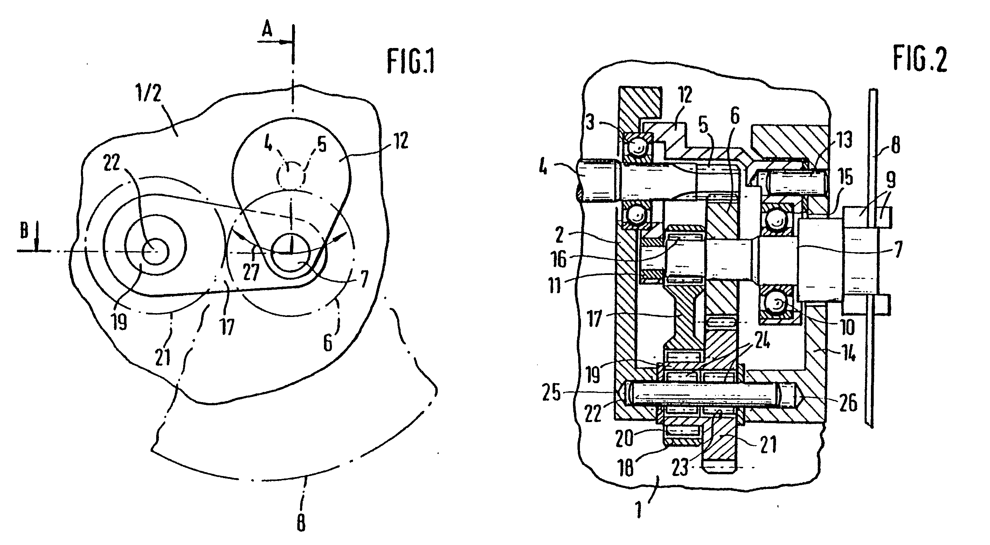

Im Ausführungsbeispiel nach den Figuren 1 und 2 ist in einem Kreissägegehäuse 1 ein Getriebegehäuse 2 angeordnet. In diesem Getriebegehäuse 2 lagert in einem Kugellager 3 eine Motorwelle 4 eines nicht dargestellten Motors. Am Ende hat diese Motorwelle 4 ein Ritzel 5, das eingreift in ein Zahnrad 6. Das Zahnrad 6 sitzt fest auf einer Sägeblattwelle 7. Auf der Sägeblattwelle 7 ist ein Kreissägeblatt 8 festgespannt, mittels einer Verspannvorrichtung 9. Die Sägeblattwelle 7 lagert in einem Kugellager 10 und einem Gleitlager 11 in einer Schwinge 12. Die Schwinge 12 ihrerseits ist U-förmig ausgebildet. Sie lagert einmal auf dem Außenring des Kugellagers 3 und zum anderen auf einem Bolzen 13 in einem Lagerdeckel 14. Durch einen Durchbruch 15 in diesem Lagerdeckel 14 ragt die Sägeblattwelle 7 nach außen. Neben dem Zahnrad 6 auf der Sägeblattwelle 7 lagert, mittels eines Nadellagers 16, eine Hubstange 17. Diese Hubstange 17 umfaßt mit ihrem Auge 18 an ihrem anderen Ende einen Nocken 19. Zwischen die Bohrung im Auge 18 und dem Nocken 19 ist ein Nadellager 20 eingefügt. Der Nocken 19 ist durch die Nabe eines Zahnrades 21 gebildet, das weniger Zähne hat als das Zahnrad 6 und mit diesem in Eingriff steht. Das Zahnrad 21 mit dem Nocken 19 wird getragen von einer Achse 22. Dabei durchgreift diese Achse 22 eine exzentrische Bohrung 23 im Zahnrad 21 mit dem Nocken 19. Auch hier sind Nadellager zwischengeschaltet, die mit 24 bezeichnet sind. Die Achse 22 lagert gehäusefest in Bohrungen 25 im Getriebegehäuse 2 und 26 im Lagerdeckel 14. Ein Doppelpfeil 27 gibt die durch die Schwinge 12 erzwungene Schwenkbewegung der Sägeblattwelle 7 und damit des Kreissägeblattes 8 an.

Nach dem Einschalten des Antriebs der Kreissäge treibt die Motorwelle 4 über ihr Ritzel 5 und das Zahnrad 6 die Sägewelle 7 mit dem Sägeblatt 8 an. Damit wird das Sägeblatt 8 um seine Achse gedreht und zugleich um die Motorwelle 4 pendelnd bewegt. Die Pendelbewegung geht von einem Hubantrieb mit dem Zahnrad 21 und dem Nocken 19 aus. Das in das Zahnrad 21 eingreifende Zahnrad 6 überträgt seine Drehbewegung auf das Zanhrad 21 und damit auf den Nocken 19. Die exzentrische Lagerung des Zahnrades 21 mit dem Nocken 19 auf der feststehenden Achse 22 und die Hubstange 17 bewirken, daß die Sägeblattwelle 7 dem exzentrisch bewegten Mantel des Nockens 19 folgen muß. Da die Exzentrizität des Nockens 19 und des Zahnrades 21 übereinstimmen, bleibt der Zahneingriff zwischen den Zahnrädern 6 und 21 stets einwandfrei. Die Größe bzw. die Form des Durchbruchs 15 lassen der Sägeblattwelle 7 genügend Bewegungsfreiheit. Durch die verschiedene Zähnezahl der Zahnräder 6 und 21 wandert der Kreisabschnitt mit den beim Vorhub greifenden Zähnen des Sägeblattes 8 rund um das Sägeblatt 8 herum. So kommen nach und nach alle Zähne des Sägeblattes 8 zum Einsatz.

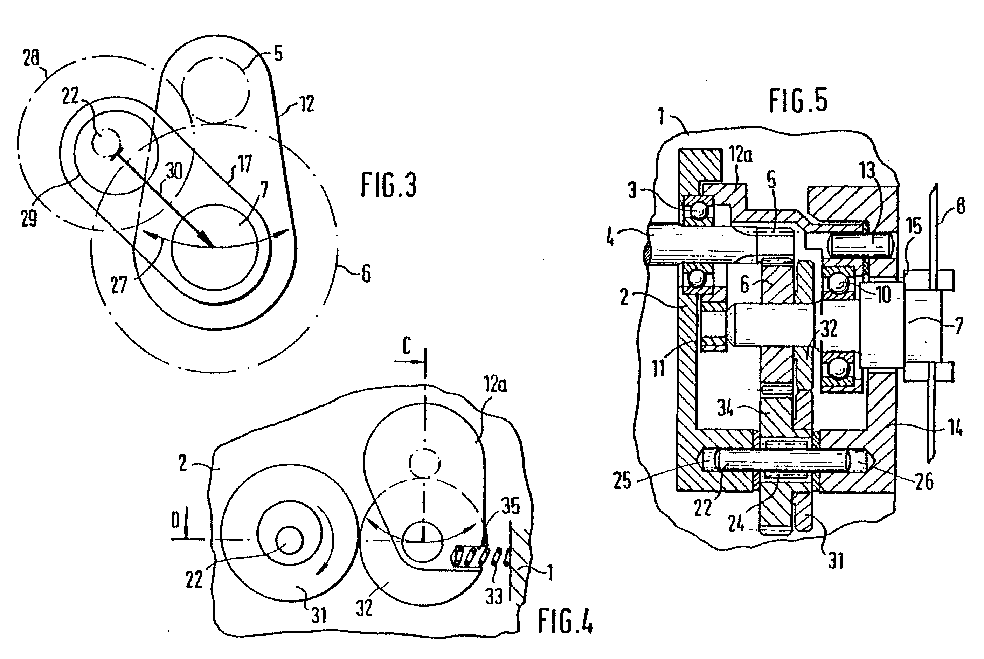

Im Ausführungsbeispiel nach Figur 3 ist das Getriebe für den Antrieb des Sägeblattes 8 verändert. Das Ritzel 5 treibt direkt sowohl das Zahnrad 6 als auch ein zum Zahnrad 6 seitlich versetztes Zahnrad 28 an. Hierzu ist die gehäusefeste Achse 22 so verlagert, daß sich die Teilkreise des Ritzels 5 und des auf der Achse 22 gelagerten Zahnrades 28 berühren. Die Hubstange 17 blieb unverändert. Der Nocken 19 ist ersetzt durch einen vom Zahnrad 28 getrennten Nocken 29, der allein noch exzentrisch zur Achse 22 gelagert ist. So ist zwar der Übertragungswinkel für die Übertragung der Kraft für die Hubbewegung (Pfeil 30) vom Nocken 29 auf die Sägeblattwelle 7 nicht mehr so günstig, dafür ist aber die Größe der oszillierenden Massen verringert. Das Zahnrad 28 läuft, im Gegensatz zum Zahnrad 21, ohne Unwucht.

Im Ausführungsbeispiel nach den Figuren 4 und 5 ist an die Stelle der Hubstange 17 nach dem ersten Ausführungsbeispiel die Anordnung zweier Scheiben, einer ersten Scheibe 31 auf der Achse 22 und einer zweiten Scheibe 32 auf der Sägeblattwelle 7, einer veränderten Schwinge 12a und einer diese treibenden Schraubenfeder 33 getreten. Die erste Scheibe 31 ist einem das Zahnrad 21 ersetzenden ersten Zahnrad 34 zugeordnet, das mittels eines Nadellagers 24 auf der Achse 22 gelagert ist. Der Außendurchmesser der ersten Scheibe 31 entspricht dem Teilkreisdurchmesser des ersten Zahnrades 34. Der Außendurchmesser der zweiten Scheibe 32 entspricht dem Teilkreisdurchmesser des als zweites Zahnrad dienenden Zahnrades 6. Die Schraubenfeder 33 ist in eine Bohrung 35 in der Schwinge 12a eingesetzt und stützt sich am Kreissägegehäuse 1 so ab, daß sie die Schwinge 12a zur Achse 22 hin drängt. Dabei legt sie die Umfangsflächen der ersten Scheibe 31 und der zweiten Scheibe 32 aneinander an. Damit werden das erste Zahnrad 34 und das zweite Zahnrad 6 kraftschlüssig im gegenseitigen Eingriff gehalten. Diese Ausführungsform des Erfindungsgegenstandes ist fertigungstechnisch weniger aufwendig als die nach dem ersten Ausführungsbeispiel. Die Herstellung der Hubstange 17 ist aufwendiger als die der ersten Scheibe 31 und der zweiten Scheibe 32. Es werden zusätzlich nur ein Nadellager und eine Schraubenfeder gebraucht. Im ersten Ausführungsbeispiel werden zum gleichen Zweck vier Nadellager benötigt.

Die Wirkungsweise entspricht der nach dem ersten Ausführungsbeispiel. Dabei ist zweckmäßig, darauf zu achten, daß der Vorhub mit dem Zusammendrücken der Schraubenfeder 33 zusammenfällt. So wird der Arbeitsdruck durch die Scheiben 31 und 32 aufgenommen. Die Schraubenfeder 33 braucht nur zu bewirken, daß die Schwinge 12a zurückschwingt.

## Ansprüche

1. Handkreissäge mit einem Gehäuse (1), einer Motorwelle (4) und einer Sägeblattwelle (7) zur Vermittlung einer Drehzahl auf ein Kreissägeblatt (8), dadurch gekennzeichnet, daß auf der Motorwelle (4) eine die Sägeblattwelle (7) haltende Schwinge (12) gelagert ist und die Sägeblattwelle (7) über einen Hubantrieb hin- und herbewegbar ist, wobei die Hubfrequenz ungleich der Drehzahl der Sägeblattwelle (7) ist.

2. Handkreissäge nach Anspruch 1, dadurch gekennzeichnet, daß die Sägeblattwelle (7) von der Motorwelle (4) angetrieben wird.

3. Handkreissäge nach Anspruch 2, dadurch gekennzeichnet, daß der Hubantrieb ein auf einer gehäusefesten Achse (22) exzentrisch gelagertes Zahnrad (21) umfaßt, das in ein Zahnrad (6) auf der Sägeblattwelle (7) eingreift.

4. Handkreissäge nach Anspruch 3, dadurch gekennzeichnet, daß ein Nocken (19) auf auf der gehäusefesten Achse (22) über eine als Koppel wirkende Hubstange (17) mit der Sägeblattwelle (7) verbunden ist.

5. Handkreissäge nach Anspruch 4, dadurch gekennzeichnet, daß das exzentrisch gelagerte Zahnrad (21) und das Zahnrad (6) unterschiedliche Zähnezahlen haben.

6. Handkreissäge nach Anspruch 5, dadurch gekennzeichnet, daß die Schwinge (12, 12a) u-förmig ausgestaltet ist.

7. Handkreissäge nach Anspruch 6, dadurch gekennzeichnet, daß der Hubantrieb ein auf einer gehäusefesten Achse (22) gelagertes und in ein Zahnritzel (5) auf der Motorwelle (4) eingreifendes Zahnrad (28) sowie einen mit diesem Zahnrad (28) drehfest verbundenen Nokken (29) umfaßt, wobei der exzentrisch gelagerte Nocken (29) über eine Hubstange (17) mit der Sägeblattwelle (7) verbunden ist.

8. Handkreissäge nach Anspruch 7, dadurch gekennzeichnet, daß der Hubantrieb ein auf einer gehäusefesten Achse (22) exzentrisch gelagertes, erstes Zahnrad (34), eine gleichachsig mit dem Zahnrad (34) drehbare, erste Scheibe (31) mit vorzugsweise dem Teilkreisdurchmesser des ersten Zahnrads (34) entsprechendem Außendurchmesser, ein in das erste Zahrad (34) eingreifendes zweites Zahrad (6) auf der Sägeblattwelle (7) und eine mit diesem zweiten Zahrad (6) auf der Sägeblattwelle (7) gelagerte zweite Scheibe (32) mit vorzugsweise dem Teildreisdurchmesser des zweiten Zahnrades (6) entsprechendem Außendurchmesser, sowie eine Feder (33) umfaßt, die die erste und die zweite Scheibe (31, 32) einander anliegend zu halten sucht.

## Claims

1. Hand circular saw with a housing (1), a motor shaft (4) and a saw blade shaft (7) to transmit a speed of rotation to a circular saw blade (8), characterised in that a rocker arm (12) holding the saw blade shaft (7) is supported on the motor shaft (4), and the saw blade shaft (7) can be moved to and fro by means of a lifting drive, the lifting frequency being unequal to the speed of rotation of the saw blade shaft (7).

2. Hand circular saw according to Claim 1, characterised in that the saw blade shaft (7) is driven by the motor shaft (4).

3. Hand circular saw according to Claim 2, characterised in that the lifting drive comprises a gear wheel (21) supported eccentrically on a spindle (22) fixed in the casing and meshing with a gear wheel (6) on the saw blade shaft (7).

4. Hand circular saw according to Claim 3, characterised in that a cam (19) on the spindle (22) fixed in the casing is connected to the saw blade shaft (7) by means of a lifting rod (17) acting as a couple.

5. Hand circular saw according to Claim 4, characterised in that the eccentrically supported gear wheel (21) and the gear wheel (6) have different numbers of teeth.

6. Hand circular saw according to Claim 5, characterised in that the rocker arm (12, 12a) is made U-shaped.

7. Hand circular saw according to Claim 6, characterised in that the lifting drive comprises a gear wheel (28) which is supported on a spindle (22) fixed in the casing and meshes with a pinion (5) on the motor shaft (4), and also comprises a cam (29) non-rotationally connected to this gear wheel (28), the eccentrically supported cam (29) being connected by means of a lifting rod (17) to the saw blade shaft (7).

8. Hand circular saw according to Claim 7, characterised in that the lifting drive comprises a first gear wheel (34) eccentrically supported on a spindle (22) fixed in the casing, a first disc (31) rotatable coaxially with the gear wheel (34), with external diameter preferably corresponding to the reference diameter of the first gear wheel (34), a second gear wheel (6) on the saw blade shaft (7) meshing with the first gear wheel (34), and a second disc (32) supported with this second gear wheel (6) on the saw blade shaft (7), with external diameter preferably corresponding to the reference diameter of the second gear wheel (6), and also a spring (33) which tries to hold the first and the second disc (31, 32) lying against each other.

## Revendications

1. Scie circulaire manuelle avec un boîtier (1), un arbre moteur (4) et un arbre de lame de scie (7) pour créer une vitesse de rotation sur une lame de scie circulaire (8), caractérisée en ce que, sur l'arbre moteur (4) est logée une bielle oscillante (12) supportant l'arbre de la lame de scie (7) et l'arbre de la lame de scie (7) peut effectuer un mouvement de va et vient par l'intermédiaire d'une transmission, la fréquence de course étant différente de la vitesse de rotation de l'arbre de la lame de scie (7).

2. Scie circulaire manuelle selon la revendication 1, caractérisée en ce que l'arbre de lame de scie (7) est commandé par l'arbre moteur (4).

3. Scie circulaire manuelle selon la revendication 2, caractérisée en ce que la commande de la course comprend une roue dentée (21) logée excentrique sur un axe (22) fixé sur le boîtier, et qui engrène dans une roue dentée (6) de l'arbre de la lame de scie (7).

4. Scie circulaire manuelle selon la revendication 3, caractérisée en ce qu'une came (19) logée sur l'axe (22) fixée sur le boîtier est liée à l'arbre de lame de scie (7) par une tige de course (17) agissant comme bielle.

5. Scie circulaire manuelle selon la revendication 4, caractérisée en ce que la roue dentée (21) logée excentrique et la roue dentée (6) ont des nombres de dents différents.

6. Scie circulaire manuelle selon la revendication 5, caractérisée en ce que la bielle oscillante (12, 12a) est réalisée en forme d'U.

7. Scie circulaire manuelle selon la revendication 6, caractérisée en ce que l'entraînement de la course comprend une roue dentée (28) logée sur un axe (22) fixé au boîtier et engrenant dans un pignon (5) de l'arbre moteur (4), ainsi qu'une came (29) liée solidaire en rotation avec cette roue dentée (28), la came (29) logée excentrée étant reliée à l'arbre de lame de scie (7) par une tige de course (17).

8. Scie circulaire manuelle selon la revendication 7, caractérisée en ce que l'entraînement de la course comprend une première roue dentée (34) logée excentrique sur un axe (22) fixé sur le boîtier, un premier disque (31) pouvant tourner, de même axe que la roue dentée (34) et avec de préférence un diamètre extérieur correspondant au diamètre primitif de référence de la première roue dentée (34), une deuxième roue dentée (6) sur l'arbre de lame de scie (7) engrènant avec la première roue dentée (34) et un deuxième disque (32) logé sur l'arbre de lame de scie (7) avec cette deuxième roue dentée (6) et ayant un diamètre extérieur de préférence correspondant au diamètre primitif de référence de la deuxième roue dentée (6), ainsi qu'un ressort (33), qui tend à maintenir adhérents l'un à l'autre le premier et le deuxième disque (31, 32).

FIG.1

FIG.2

EP 0 175 910 B1

FIG.5

FIG.3

FIG.4